# EUROPEAN PATENT APPLICATION

(11) **EP 1 767 901 A2**
(43) Date of publication of application: **28.03.2007**
(21) Application number: 06121010.0
(22) Date of filing: 21.09.2006
(51) Int. Cl.: G01C 19/66

(54) **Fill tube/flange assembly for ring laser gyroscope block**

(30) Priority: 21.09.2005 US 232350
(71) Applicant: HONEYWELL INC., Morristown, New Jersey 07962 (US)
(72) Inventor: Stay, Chad P, Brooklyn Park, MN 55443 (US); Jarreth, Mark Jay, Lake Elmo, MN 55042 (US)
(74) Representative: Haley, Stephen

(57) **Abstract**

A fill tube and flange assembly (100) for fabrication of ring laser gyroscope blocks (14) is described. The assembly includes a flange assembly (106), a fill tube assembly, and a compression interface (120), The flange assembly includes a flange tube (110) and a fluid port (102) at a first end of the flange assembly tube. The fill tube assembly includes a fill tube (114) and a laser block engaging portion at a first end (54) of the fill tube. The compression interface is configured to couple second ends (132) of the fill tube and the flartge assembly tube.

## Description

This invention relates generally to fabrication of ring laser gyroscopes, and more particularly, to a fill tube and flange assembly that is utilizing in the processing of the bores of the laser block, for example, with a gas used in the generation of a laser beam within the block.

Ring laser gyroscopes are well known and are widely utilized in aerospace systems, weapons delivery systems, and multiple other applications. However, construction of these ring laser gyroscopes is expensive, and includes construction of numerous ancillary parts that are not included or are only partially included in the finished ring laser gyroscope.

One of these ancillary parts is a fill tube welded to a flange. This assembly, as the name implies, is fabricated by welding a flange onto a fill robe. The welding process is tedious because the fill tube and flange may be formed from different alloys, and also because particulates from the welding process may end up within the fill tube portion. Any welding particulates that may end up within the laser block as a result of the welding process could be detrimental to operation of the finished ring laser gyroscope product.

The fill tube engages a block of the ring laser gyroscope and the flange engages a processing station utilized in the fabrication of ring laser gyroscope laser blocks. After processing steps performed at this particular processing station are complete, the fill tube is compressed between the flange and the portion of the fill tube that engages the block. As the fill tube is compressed, it forms a seal for a portion of the block of the gyroscope. A remainder of the assembly (e.g., the portion having the flange welded thereto) is broken off. The flange is sometimes referred to as a fluid port as fluids utilized in the processing of ring laser gyroscope blocks are "ported" through the flange. This process of breaking off the fluid port and a portion of the fill tube is thought to be inefficient as this welded flange portion may be discarded after the processing of only one gyroscope block. Alternatively, the fluid port is cut out from the remaining portion of the fill tube and re-welded to a new fill tube. In one known process the fluid port may be re-welded to a fill tube up to four times. However, such a large amount of processing by personnel raises costs and with each additional weld, the fluid port has an increased possibility of becoming compromised.

In one aspect, a fill tube and flange assembly for fabrication of ring laser gyroscope blocks is provided. The assembly comprises a flange assembly comprising a tube and a fluid port at a first end of the flange assembly tube, a fill tube assembly comprising a fill tube and a laser block engaging portion at a first end of the fill tube, and a compression interface. The compression interface is configured to couple the second ends of the fill tube and the flange assembly tube,

In another aspect, a method of attaching a laser block of a ring laser gyroscope to a processing station is provided. The method comprises providing a flange assembly having a first end configured with a flange to interface with a ring laser gyroscope laser block processing station, providing a fill tube assembly having a first end configured with a laser block engaging portion configured for a sealing engagement with the laser block, and attaching the fill tube assembly and the flange assembly with a compression interface configured to couple second ends of the flange assembly and the fill tube assembly.

In still another aspect, a fill tube assembly used in the processing of ring laser gyroscope blocks is provided. The fill tube assembly comprises a fill tube, a laser block engaging portion at a first end of the fill tube, and a circular protrusion extending from a second end of the fill tube. The circular protrusion is configured to engage a seal within a compression interface.
Figure 1 is a plan view of a laser block assembly illustrating a closed loop optical path of the laser block.
Figure 2 is a side view of a flange assembly configured to interface a laser block to a processing station.
Figure 3 is a side view of a portion of the assembly after it has been separated during a processing step.
Figure 4 is a side view of a fill tube and a flange assembly that includes a compression interface therebetween.
Figure 5 is an exploded view of the fill tube and flange assembly of Figure 4.

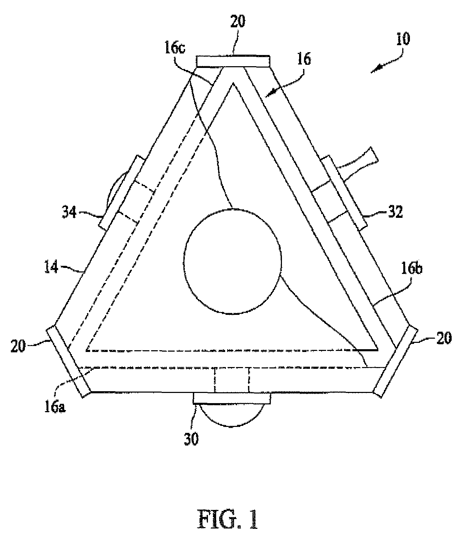

A representative laser block assembly 10 which can be processed using the below described fill tube/flange assembly is shown in Figure 1. However, it is to be understood that other types of laser block assemblies can also be processed using the fill tube/flange assembly in accordance with the invention. Laser block assembly 10 includes a laser block 14 having an optical closed loop pathway 16 comprising a plurality of interconnected passages 16a, 16b, and 16c (shown partially in phantom). Reflective surfaces, such as mirrors 20, are positioned and appropriately angled at the intersection of the individual passages 16a, 16b, and 16c to reflect light from one passage into another passage. Excitation electrodes 30, 32, and 34 are mounted to laser block 14 in fluid communication with the closed loop path 16. Closed loop passage 16 is filled with a lasing gas, such as a mixture of helium and neon, through one of the electrodes appropriately fitted with a fluid port configured to interface with a fill tube/flange assembly.

In forming a ring laser gyroscope from laser block assembly 10, electrodes 30,32, and 34 are connected to a source of electrical potential (not shown), with excitation electrode 30 being connected to the negative terminal of the source of electrical potential (to function as a cathode) and excitation electrodes 32 and 34 being connected to the positive terminal of the source of electrical potential (to act as anodes). An electrical potential is placed across the cathode 30 and the anodes 32 and 34 through the lasing gas, which electrically charges the lasing gas to generate a pair of counter-rotating lasers. A sensor array (not shown) is also added in forming a ring laser gyroscope from laser block assembly 10 to measure the angular rate experienced by the laser block assembly 10 as a function of the deflection of the lasers.

To ensure the proper operation of a ring laser gyroscope that includes laser block assembly 10, the laser block assembly 10 undergoes a series of processing steps. For example, laser block 14 is typically formed from a dielectric material, such as glass or glass-ceramic, having a relatively low coefficient of thermal expansion. It is typically necessary to cleanse the laser block 14 of contaminants or otherwise process the laser block assembly 10 prior to filling closed loop path 16 with a lasing gas. Such processing steps often include the use of a variety of processing fluids, including gases and or liquids, applied under a variety of atmospheric conditions, including full or partial vacuum.

Typically, in performing the various processing steps on a laser block assembly, only a single laser block assembly 10 is processed at a time on a station of a processing tool. That is, an individual laser block assembly is mounted to an individual station typically utilizing a fill tube welded to a flange assembly to interface laser block assembly 10 to the station. During such processing, a number of sequential processing steps are performed on the laser block assembly while interfaced (mounted) to the fill tube and flange. After the desired processing steps are carried out, the laser block assembly is removed from the processing station and the fill tube is consumed in the removal process. The flange may be removed from the remaining portion of the fill tube and reattached to a new fill tube. However, such as approach is inefficient, however, as the flange has to be manually removed from the old fill tube and manually reattached to the new fill tube. These processing costs are not the only drawback. The flange can be reattached to new fill tube only a limited number of times, for example, four times. Since a flange is essentially consumed each time a small number of laser block assemblies 10 are processed, the costs of components and construction and reconstruction of multiple piece fill tube and flange assemblies has to be incorporated into the cost of the ring laser gyroscope.

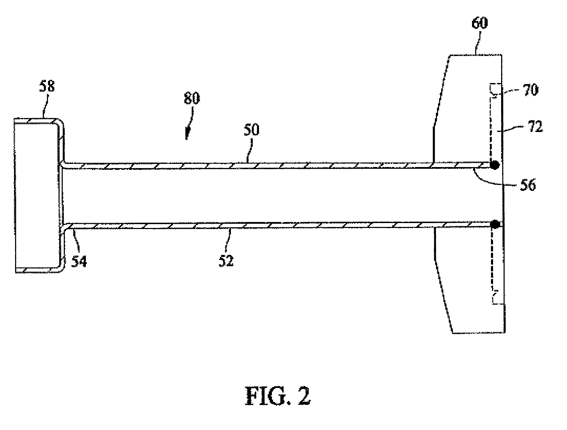

Figure 2 is a cross-sectional view of a known fill tube and flange assembly 50 that is currently utilized in the processing of laser block assemblies. Fill tube and flange assembly 50 includes an elongated tube 52 having first end 54 and a second end 56. Extending from first end 54 is a laser block interface portion 58 which is configured to engage laser block assembly 10, for example, during the purging and subsequent filling of the laser block with a lasing gas. Laser block engaging portion 58 is configured to provide a substantially permanent seal with the laser block. Welded at second end 56 of elongated tube 52 is a fluid port 60 that is configured to engage mating hardware from the processing station (not shown).

During the processing of laser block assemblies, fluid port 60 is engaged, for example, in a compression type interface with the processing station. To provide a good sealing arrangement with the processing station, fluid port 60 is typically fabricated from, for example, a stainless steel, which is capable of utilization in a compression type interface. The remainder of elongated tube 52, including laser block interfacing portion 58, is fabricated from an iron-nickel alloy which is capable of forming a cold welded seal. For example, once the laser block is filled with the lasing gas, a portion of elongated tube 52 is "pinched off", leaving the laser block engaging portion 58 and a portion of elongated tube 52 to form a seal which causes the lasing gas to be retained within the lasing block due to the cold welded seal.

As described above, fluid port 60 is attached to, typically by welding, to second end 56 of elongated tube 52, and includes a sealing mechanism that is adapted to be mated to a processing tool to provide a flow path into elongated tube 52. One preferred sealing mechanism includes a knife edge flange seal 70 within fluid port 60 that engages an annular copper gasket (not shown) that surrounds a recessed area 72 of fluid port 60. The copper gasket engages and seals with a mating surface of the processing tool to provide a fluid-tight seal between tube and flange assembly 50 and the processing tool. This fluid-tight seal permits a vacuum to be drawn if desired for a particular processing application, and ensures that processing fluid is dispensed into fill tube and flange assembly 50 without loss to the surrounding environment of the processing tool.

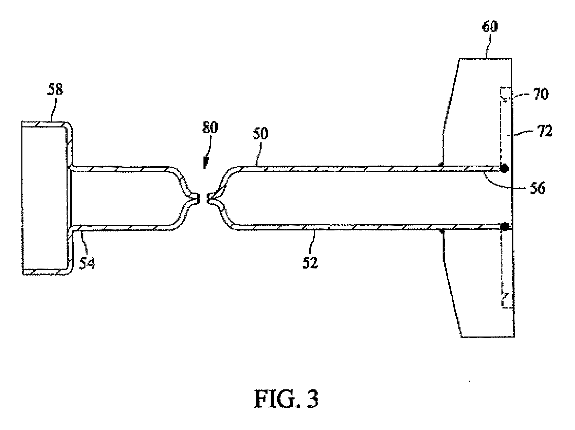

Tube and flange assembly 50 is functional for the processing of laser block assemblies 10. However, as fluid port 60 is welded to elongated tube 52, and a portion of elongated tube 52 is pinched off during the cold weld sealing process, for example at 80, a particular welded fluid port 60 and elongated tube combination is usable only once. Figure 3 is a side view of a portion of the tube and flange assembly after it has been separated at 80 during the above described processing step, The portion of the assembly that includes laser block interfacing portion 58, as described above, remains attached to the laser block after the processing step to provide a sealing function for the bores within the laser block that have been filled with a lasing gas, while the portion including the flange (e.g., fluid port 60) has to be refurbished. To reuse fluid port 60, it has to be removed from the remaining portion of elongated tube 52 and welded to another tube 52. This process is labor intensive, and a fluid port 60 may be reused only a couple of times.

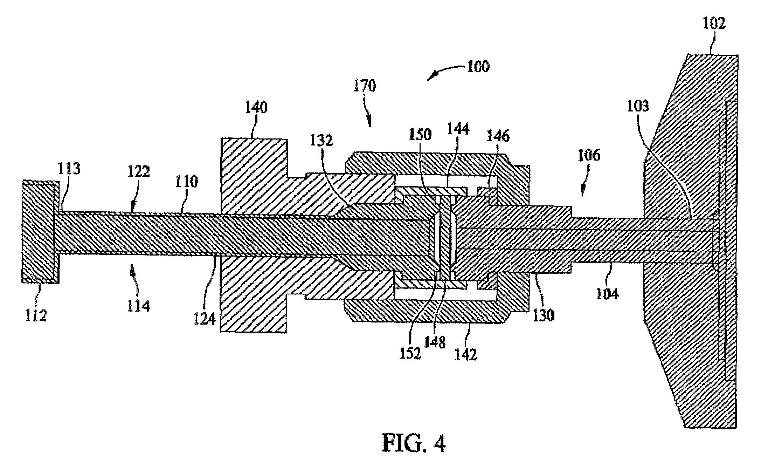

Figure 4 is a side view of a fill tube and flange assembly 100 which allows for many usages of a fluid port 102 that is welded to, or alternatively, formed integrally with at a first end 103 of a flange assembly tube 104. Fluid port 102 and flange assembly tube 104 are collectively referred to herein as a flange assembly 106. A tube 110 which is formed integrally with a laser block engaging portion 112 at a first end 113 of tube 110 is collectively referred to herein as a fill tube 114. Fluid port 102 and laser block engaging portion 112 are functionary equivalent to fluid port 60 and laser block engaging portion 58 respectively (both shown in Figure 2) and will not be described further. Fill tube and flange assembly 100 includes a compression interface 120 that is utilized to interface tubes 104 and 110. After a laser block assembly has been processed, tube 110 is pinched off in the cold weld sealing process, for example, at 122, as described above such that laser block engaging portion 112 and a portion of tube 110 remain attached to the laser block assembly. After the "pinching off" operation, sometimes referred to as a cold welded seal, a remaining portion 124 of fill tube 114 is removed from compression interface 120 and a new fill tube may be inserted and interfaced with flange assembly 106 for processing of another laser block assembly.

Both tubes 104 and 110 are configured with second ends 130 and 132 respectively that are configured for utilization with components of compression interface 120. For example, in the illustrated embodiment, compression interface 120 includes a male split-nut 140 which engages second end 132 of fill tube 14, a female nut 142 which engages second end 130 of flange assembly 106, components of a torque eliminator 144 and 146, and a seal 148. By using compression interface 120 to join second ends 130 and 132 of flange assembly 106 and fill tube 114, flange assembly 106 can be utilized in the processing of multiple laser block assemblies, which is an increase in efficiency and a decrease in costs from the fill tube flange assembly 50 (shown in Figure 2) which is manufactured using a welding process.

Flange assembly 106 is described herein as known ring laser gyroscope processing stations are configured to interface with the flange (herein, fluid port 102). In an alternative embodiment, the processing station for the ring laser gyroscope blocks is configured such that second end 132 of fill tube 114 is attachable thereto, for example, using a compression type interface, and eliminating flange assembly 106.

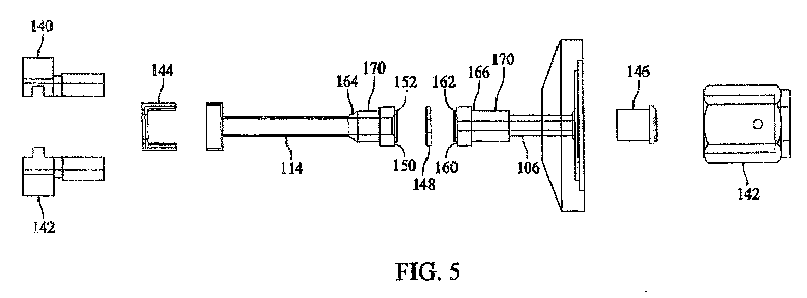

Figure 5 is an exploded view of fill tube and flange assembly 100. End surface 150 of fill tube 114 is configured with a circular protrusion 152 extending therefrom. End surface 160 of flange assembly 106 is similarly configured with a circular protrusion 162 extending therefrom. As male split-nut 140 engages a flanged area 164 (e.g., at second end 132) of fill tube 114, and likewise female nut 142 engages a flanged area 166 (e.g., at second end 130) of flange assembly 106, protrusions 152 and 162 engage seal 148. The pressure placed by protrusions 160 and 162 onto seal 148 results in a sealing arrangement allowing purging gas, lasing gas, or fluid to be passed to and from fluid port 102 and laser block engaging portion 112 without leakage.

As compression type junctions are known to twist the tubes that are being joined, optional torque eliminators 144 and 146 are configured to engage lateral formations 170 on respective ends 130 and 132 of flange assembly 106 and fill tube 114 to reduce and possibly prevent twisting and deformation of flange assembly 106 and fill tube 114 which may be detrimental to sealing and reuse of flange assembly 106.

Fill tube and flange assembly 50 (shown in Figure 2) is difficult to produce as the elongated tube 52 and fluid port 60 are individually fabricated from different alloys. Utilization of different alloys sometimes results in a difficult welding operation between the two alloys. In the embodiment of Figures 4 and 5, fill tube 114 is fabricated from bar stock of one alloy, for example, an iron-nickel alloy, and flange assembly 106 is fabricated from another alloy, for example, stainless steel.

While the invention has been described in terms of various specific embodiments, those skilled in the art will recognize that the invention can be practiced with modification within the spirit and scope of the claims.

## Claims

1. A fill tube and flange assembly (100) for fabrication of ring laser gyroscope blocks (14), said assembly comprising:
a flange assembly (106) comprising a flange assembly tube (104) and a fluid port (102) at a first end (103) of said flange assembly tube;
a fill tube assembly comprising a fill tube (114) and a laser block engaging portion (112) at a first end of said fill tube; and
a compression interface, said compression interface configured to couple second ends (132) of said fill tube and said flange assembly tube.

2. A fill tube and flange assembly (100) according to Claim 1 wherein said fill tube assembly is fabricated from a single piece of bar stock.

3. A fill tube and flange assembly (100) according to Claim 1 wherein said compression interface (120) comprises:
a male split-nut (140) configured to engage the second end (130) of said fill tube assembly;
a female nut (142) configured to engage the second end of said flange assembly tube (04); and
a seal (148) configured to be located between the second ends (132) of said fill tube assembly and said flange assembly tube,

4. A fill tube and flange assembly (100) according to Claim 3 wherein the second ends (132) of said fill tube assembly and said flange assembly tube (104) each comprise a circular protrusion (152) extending therefrom, said circular protrusions configured to engage said seal (148) as said compression interface (120) is tightened.

5. A fill tube and flange assembly (100) according to Claim 3 wherein said fill tube assembly and said flange assembly tube (104) each comprise lateral formations (170) approximate the second ends (132), said fill tube and flange assembly further comprising torque eliminators (144) configured to engage lateral formations.

6. A fill tube and flange assembly (100) according to Claim 1 wherein said fill tube assembly comprises an iron-nickel alloy and said flange assembly (106) comprises a stainless steel.

7. A fill tube and flange assembly (100) according to Claim 1 wherein at least a portion of said fill tube assembly is configured to be compressed (120) and form a cold welded seal (122).

8. A fill tube and flange assembly (100) according to Claim 1 wherein said laser block (14) engaging portion is integrally formed with said fill tube (114).

9. A fill tube and flange assembly (100) according to Claim 1 wherein said fluid port (114) is integrally formed with said flange assembly tube (104).
